# EUROPEAN PATENT SPECIFICATION

(11) **EP 3 663 258 B1**
(45) Date of publication and mention of the grant of the patent: **22.09.2021**
(21) Application number: 19209091.8
(22) Date of filing: 14.11.2019
(51) Int. Cl.: C01B 3/06, C01B 3/34, C01B 3/56, C21B 13/00

(54) **SYSTEM AND METHOD FOR PRODUCING HYDROGEN USING BY PRODUCT GAS**
SYSTEM UND VERFAHREN ZUR ERZEUGUNG VON WASSERSTOFF UNTER VERWENDUNG VON NEBENPRODUKTGAS
SYSTÈME ET PROCÉDÉ DE PRODUCTION D'HYDROGÈNE UTILISANT DES GAZ DE PRODUIT

(30) Priority: 04.12.2018 KR 20180154229
(43) Date of publication of application: 10.06.2020
(73) Proprietor: HYUNDAI MOTOR COMPANY, Seoul 06797 (KR); Kia Corporation, Seocho-gu Seoul 06797 (KR); Korea Advanced Institute of Science and Technology, Daejeon 34141 (KR)
(72) Inventor: CHOI, Seung Hyeon, 18280 Hwaseong-si, Gyeonggi-do (KR); LEE, Kyung Moon, 18280 Hwaseong-si, Gyeonggi-do (KR); PARK, Jung Joo, 18280 Hwaseong-si, Gyeonggi-do (KR); PARK, Hoon Mo, 18280 Hwaseong-si, Gyeonggi-do (KR); HAN, Gwang Woo, 18280 Hwaseong-si, Gyeonggi-do (KR); BAE, Joong Myeon, 18280 Hwaseong-si, Gyeonggi-do (KR); OH, Ji Woo, 18280 Hwaseong-si, Gyeonggi-do (KR)
(74) Representative: Viering, Jentschura & Partner mbB Patent- und Rechtsanwälte

(56) References cited:
- CA-A- 1 093 822
- JP-A- 2002 212 575
- KR-B1- 101 386 418
- WEI-HSIN CHEN ET AL: "Hydrogen production from steam reforming of coke oven gas and its utility for indirect reduction of iron oxides in blast furnace", INTERNATIONAL JOURNAL OF HYDROGEN ENERGY, ELSEVIER SCIENCE PUBLISHERS B.V., BARKING, GB, vol. 37, no. 16, 6 May 2012 (2012-05-06), pages 11748-11758, XP028405616, ISSN: 0360-3199, DOI: 10.1016/J.IJHYDENE.2012.05.021 [retrieved on 2012-05-11]
- CHEN WEI-HSIN ET AL: "Thermodynamic analysis of the partial oxidation of coke oven gas for indirect reduction of iron oxides in a blast furnace", ENERGY, ELSEVIER, AMSTERDAM, NL, vol. 86, 28 May 2015 (2015-05-28), pages 758-771, XP029225453, ISSN: 0360-5442, DOI: 10.1016/J.ENERGY.2015.04.087

## Description

### FIELD

The present disclosure relates to a system and method for producing hydrogen using a byproduct gas.

### BACKGROUND

The statements in this section merely provide background information related to the present disclosure and may not constitute prior art.

Attempts have been made in various ways to directly utilize, as energy, waste heat generated during steelmaking processes and the like.

CA 1 093 822 A relates to the treatment of coke oven gases and in particular to reducing the propensity to carbon formation of such gases.

Wei-Hsin Chen et al.: "Hydrogen production from steam reforming of coke oven gas and its utility for indirect reduction of iron oxides in blast furnace", International Journal of Hydrogen Energy, vol. 37, , no. 16, 2012, 11748-11758 relates to the thermodynamic investigation of the reaction characteristics of steam reforming of coke oven gas and indirect reduction of iron oxides using the reforming gases feedstocks.

Meanwhile, as the demand for new and renewable forms of energy increases, it may be desirable to produce hydrogen gas, which is new and renewable energy that may be stored using a byproduct gas generated during steelmaking processes and the like. Such hydrogen gas production may be able to utilize a steel mill as a power plant for new and renewable energy, and may be environmentally friendly in that hydrogen gas is additionally produced from limited resources. More specifically, it is possible to incorporate existing waste heat recovery systems because waste gas may be recycled for hydrogen gas production using the residual reduction gas.

Also, in the steelmaking process, a coke oven has a plurality of carbonization chambers to thus manufacture coke by subjecting carbon (for example, coal) to carbonization in each carbonization chamber. As such, crude coke oven gas (crude COG, non-treated COG) is generated during the carbonization of carbon into coke, and such coke oven gas (COG) is collected into a collection pipe via a riser pipe disposed at the top of each carbonization chamber and is then sent to a refining unit (a chemical conversion unit). Generally, in the course of transport of the coke oven gas generated from each carbonization chamber through the riser pipe, the coke oven gas is cooled to about 80°C through spraying of ammonia liquor, and is then mixed and collected in the collection pipe. The coke oven gas collected in the collection pipe may be sent to a chemical conversion unit so as to be subjected to a refining process or the like, and may then be used as a material for producing highly pure hydrogen.

### SUMMARY

One aspect of the present disclosure is to provide the production of hydrogen at a high yield through a dual hydrogen production process including a reforming process and a redox process from a byproduct gas generated during steelmaking processes or coal chemistry processes of existing steel mills.

Another aspect of the present disclosure is to provide the environmentally friendly production of hydrogen by decreasing the generation of byproducts while producing hydrogen at a higher yield than existing hydrogen production systems and methods.

The aspects of the present disclosure are not limited to the foregoing, and other specific details of the present disclosure are contained in the detailed description and drawings.

In order to accomplish the above aspect, the present disclosure provides a system for producing hydrogen from a byproduct gas generated during a steelmaking process or a coal chemistry process, the system comprising: a reformer for reforming the byproduct gas using steam (H₂O), a separator for separating a reformed gas supplied from the reformer into a reduction gas and hydrogen gas (H₂), a first reactor for reducing ferric oxide (Fe₂O₃) into ferrous oxide (FeO) using the reduction gas supplied from the separator, and a second reactor for producing ferrous-ferric oxide (Fe₃O₄) and hydrogen gas (H₂) by mixing the ferrous oxide (FeO) supplied from the first reactor with steam (H₂O), wherein the concentration of hydrogen gas (H₂) in the reformed gas discharged from the reformer may be higher than the concentration of hydrogen gas (H₂) in the byproduct gas, wherein the byproduct gas includes coke oven gas comprising hydrogen, methane, carbon monoxide, nitrogen, carbon dioxide, ethylene and oxygen.

A third reactor, which is connected to the first reactor and the second reactor, may be further included, and the third reactor may be configured such that ferrous-ferric oxide (Fe₃O₄) supplied from the second reactor is mixed with oxygen (O₂) and is thus oxidized into ferric oxide (Fe₂O₃), and the oxidized ferric oxide (Fe₂O₃) is supplied to the first reactor.

The internal temperature of the reformer may be 600°C to 900°C.

The separator may include a pressure swing adsorption (PSA) unit.

A portion of the steam (H₂O) fed to the second reactor may be supplied from the first reactor.

In the byproduct gas, a steam-to-carbon ratio (H₂O/CH₄) may be 2.5 to 3.5.

The reduction gas may include at least one selected from the group consisting of hydrogen gas (H₂), carbon monoxide (CO), methane gas (CH₄) and combinations thereof.

In addition, the present disclosure provides a method of producing hydrogen, comprising: generating a reformed gas by reforming a byproduct gas generated during a steelmaking process or a coal chemistry process with steam (H₂O), separating the reformed gas into a reduction gas and hydrogen gas (H₂), reducing ferric oxide (Fe₂O₃) into ferrous oxide (FeO) using the reduction gas, and producing ferrous-ferric oxide (Fe₃O₄) and hydrogen gas (H₂) by reacting the reduced ferrous oxide with steam (H₂O), wherein, in the generating the reformed gas, the concentration of hydrogen gas (H₂) in the reformed gas may be higher than the concentration of hydrogen gas (H₂) in the byproduct gas, wherein the byproduct gas includes coke oven gas comprising hydrogen, methane, carbon monoxide, nitrogen, carbon dioxide, ethylene and oxygen.

The reducing the ferric oxide (Fe₂O₃) into the ferrous oxide (FeO) may include the reaction represented by Scheme 1 below.

[Scheme 1] 4Fe₂O₃ + CH₄ → 8FeO + 2H₂O + CO₂

The producing the ferrous-ferric oxide (Fe₃O₄) and the hydrogen gas (H₂) may include the reaction represented by Scheme 2 below.

[Scheme 2] 8FeO + 8/3 H₂O → 8/3 Fe₃O₄ + 8/3 H₂

In the reducing the ferric oxide (Fe₂O₃) into the ferrous oxide (FeO) using the reduction gas, a portion of the ferric oxide (Fe₂O₃) may include ferric oxide obtained by mixing oxygen (O₂) with ferrous-ferric oxide (Fe₃O₄) resulting from the producing the ferrous-ferric oxide (Fe₃O₄) and the hydrogen gas (H₂).

The ferrous-ferric oxide (Fe₃O₄) and the oxygen (O₂), which are mixed, may be formed into ferric oxide (Fe₂O₃) through the reaction represented by Scheme 3 below.

[Scheme 3] 8/3 Fe₃O₄ + 2/3 O₂ → 4Fe₂O₃

The separating the reformed gas into the reduction gas and the hydrogen gas (H₂) may include a pressure swing absorption (PSA) process.

The generating the reformed gas may be performed at a temperature of 600°C to 900°C.

In the byproduct gas, a steam-to-carbon ratio (H₂O/CH₄) may be 2.5 to 3.5.

The reduction gas may include at least one selected from the group consisting of hydrogen gas (H₂), carbon monoxide (CO), methane gas (CH₄) and combinations thereof.

In the producing the ferrous-ferric oxide (Fe₃O₄) and the hydrogen gas (H₂), a portion of the steam (H₂O) may include steam resulting from the reducing the ferric oxide (Fe₂O₃) into the ferrous oxide (FeO).

The details of other forms are included in the detailed description and drawings.

In the hydrogen production system and method according to some forms of the present disclosure, highly pure hydrogen can be produced in a large amount from a byproduct gas generated during steelmaking processes or coal chemistry processes in existing steel mills.

Moreover, the generation of byproducts can be decreased while producing hydrogen at a higher yield because of higher methane (CH₄) conversion rates than existing hydrogen production systems and methods.

The effects of the present disclosure are not limited to the foregoing, and should be understood to include all effects that can be reasonably anticipated from the following description.

Further areas of applicability will become apparent from the description provided herein. It should be understood that the description and specific examples are intended for purposes of illustration only and are not intended to limit the scope of the present disclosure.

### DRAWINGS

In order that the disclosure may be well understood, there will now be described various forms thereof, given by way of example, reference being made to the accompanying drawings, in which:
FIG. 1 schematically shows a hydrogen production system according to some forms of the present disclosure;
FIG. 2 schematically shows a hydrogen production system and process according to some forms of the present disclosure;
FIG. 3 schematically shows a hydrogen production system and process in Example 1;
FIG. 4 schematically shows a hydrogen production process in Example 1 and Comparative Examples 1 and 2;
FIG. 5 is a graph showing the hydrogen yield depending on the temperature in Example 1;
FIG. 6 is a graph showing the methane conversion rate depending on the temperature in Example 1;
FIG. 7 shows a tester for evaluating the conversion into a reformed gas when the byproduct gas used is coke oven gas (COG);
FIG. 8 is a graph showing the results of measurement of concentration and thermodynamic equilibrium value depending on the temperature in order to evaluate reforming performance in Example 1;
FIG. 9 is a graph showing the results of measurement of methane conversion rate and thermodynamic equilibrium value depending on the temperature in order to evaluate reforming performance in Example 1;
FIG. 10 is a graph showing absolute amounts of hydrogen gas (H₂) and carbon monoxide (CO) used for a reduction test using a reference material; and
FIG. 11 is a graph showing the results of the reduction test of FIG. 10.

The drawings described herein are for illustration purposes only and are not intended to limit the scope of the present disclosure in any way.

### DETAILED DESCRIPTION

The following description is merely exemplary in nature and is not intended to limit the present disclosure, application, or uses. It should be understood that throughout the drawings, corresponding reference numerals indicate like or corresponding parts and features.

Hereinafter, aspects of the present disclosure will be described in detail with reference to the accompanying drawings. The advantages and features of the present disclosure, as well as how to accomplish them, will become apparent with reference to the forms described in detail below with reference to the accompanying drawings. However, the present disclosure is not limited to the forms disclosed below, but may be embodied in various forms. Throughout the drawings, the same reference numerals will refer to the same or like elements.

Unless defined otherwise, all terms (including technical and scientific terms) used herein may be used in a sense that is commonly understood by those skilled in the art to which the present disclosure belongs. Also, commonly used predefined terms are not to be ideally or excessively interpreted unless explicitly defined otherwise.

Furthermore, the terminology used herein is for the purpose of illustrating forms and is not intended to limit the present disclosure. In this specification, singular forms include plural forms unless the context clearly dictates otherwise. It will be further understood that the terms "comprise" and/or "include", when used in this specification, specify the presence of stated elements, features, numbers, steps, and/or operations, but do not preclude the presence or addition of one or more other elements, features, numbers, steps, and/or operations. Here, the term "and/or" includes each of the mentioned items and all combinations of one or more thereof.

Also, it will be understood that when an element such as a layer, film, area, or sheet is referred to as being "on" another element, it can be directly on the other element, or intervening elements may be present therebetween. In contrast, when an element such as a layer, film, area, or sheet is referred to as being "under" another element, it can be directly under the other element, or intervening elements may be present therebetween.

Unless otherwise specified, all numbers, values, and/or representations that express the amounts of components, reaction conditions, polymer compositions, and mixtures used herein are to be taken as approximations including various uncertainties affecting the measurements that occur in obtaining these values, among others, and thus should be understood to be modified by the term "about" in all cases. Furthermore, when a numerical range is disclosed in this specification, the range is continuous, and includes all values from the minimum value of said range to the maximum value thereof, unless otherwise indicated. Moreover, when such a range pertains to integer values, all integers including the minimum value to the maximum value are included, unless otherwise indicated.

In the present specification, when a range is described for a variable, it will be understood that the variable includes all values including the end points described within the stated range. For example, the range of "5 to 10" will be understood to include any subranges, such as 6 to 10, 7 to 10, 6 to 9, 7 to 9, and the like, as well as individual values of 5, 6, 7, 8, 9 and 10, and will also be understood to include any value between valid integers within the stated range, such as 5.5, 6.5, 7.5, 5.5 to 8.5, 6.5 to 9, and the like. Also, for example, the range of "10% to 30%" will be understood to include any subranges, such as 10% to 15%, 12% to 18%, 20% to 30%, etc., as well as all integers including values of 10%, 11%, 12%, 13% and the like up to 30%, and will also be understood to include any value between valid integers within the stated range, such as 10.5%, 15.5%, 25.5%, and the like.

As used herein, the ratio is to be understood as indicating a stoichiometric ratio, unless otherwise stated.

Hereinafter, a detailed description will be given of the present disclosure with reference to the appended drawings.

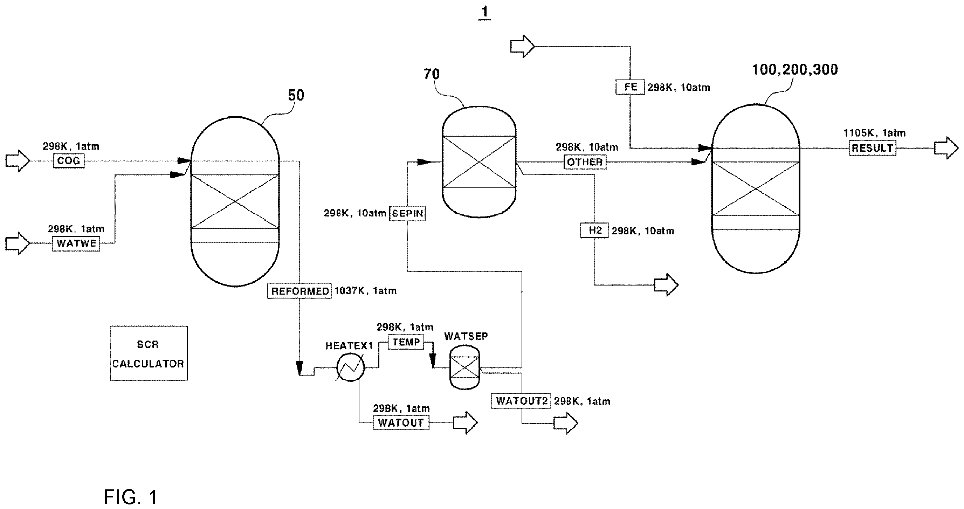

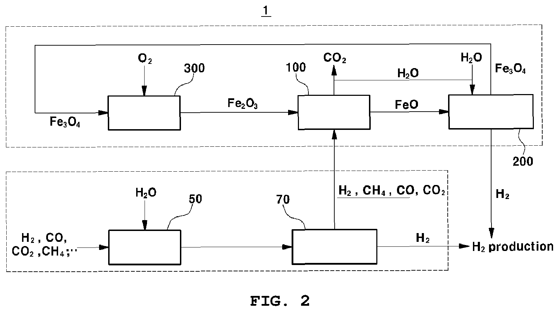

FIGS. 1 and 2 schematically show a hydrogen production system and a hydrogen production process according to some forms of the present disclosure.

With reference to FIG. 1, the hydrogen production system 1 for producing hydrogen from a byproduct gas generated during a steelmaking process or a coal chemistry process according to the present disclosure may include a reformer 50, a separator 70, and reactors 100, 200, 300. In the reformer 50, the byproduct gas (e.g. byproduct gas containing methane (CH₄)) may be converted into a reformed gas, and in the separator 70, hydrogen (H₂) may be separated from the reformed gas. In the reactors 100, 200, 300, oxidation and reduction may be carried out. In particular, such oxidation and reduction may include reduction of ferric oxide (Fe₂O₃) or oxidation of ferrous-ferric oxide (Fe₃O₄).

More specifically, with reference to FIG. 2, the hydrogen production system 1 according to the present disclosure includes a reformer 50 for reforming the byproduct gas using steam (H₂O), a separator 70 for separating the reformed gas supplied from the reformer 50 into a reduction gas and hydrogen gas (H₂), a first reactor 100 for reducing ferric oxide (Fe₂O₃) into ferrous oxide (FeO) using the reduction gas supplied from the separator 70, and a second reactor 200 for producing ferrous-ferric oxide (Fe₃O₄) and hydrogen gas (H₂) by mixing steam (H₂O) with ferrous oxide (FeO) supplied from the first reactor.

In particular, the hydrogen production system 1 according to the present disclosure is characterized in that the concentration of hydrogen gas (H₂) in the reformed gas discharged from the reformer 50 is higher than the concentration of hydrogen gas (H₂) in the byproduct gas. Specifically, the byproduct gas supplied to the reformer 50 may react with steam (H₂O), and may thus be converted into a reformed gas whose hydrogen (H₂) concentration is amplified.

In the hydrogen production system 1 according to the present disclosure, hydrogen (H₂) primarily obtained from the separator 70 and hydrogen (H₂) secondarily obtained through separation from the second reactor 200 are included, ultimately affording an increased amount of hydrogen (H₂).

The hydrogen production system 1 according to an form of the present disclosure may further include a third reactor 300, which is connected to the first reactor 100 and the second reactor 200. The third reactor 300 allows ferrous-ferric oxide (Fe₃O₄) supplied from the second reactor 200 to be mixed with oxygen (O₂) to thus be oxidized into ferric oxide (Fe₂O₃). Simultaneously, the third reactor 300 may be configured to supply the oxidized ferric oxide (Fe₂O₃) to the first reactor 100. In the hydrogen production system 1 according to the present disclosure, the first reactor 100 to the third reactor 300 may constitute a looping process. Thus, hydrogen may be produced at a high yield from the supplied byproduct gas and the generation of byproducts may be decreased compared to conventional cases.

More specifically, a hydrogen production method, which is performed in the hydrogen production system 1 according to an form of the present disclosure, may include generating a reformed gas by reforming a byproduct gas generated during a steelmaking process or a coal chemistry process with steam (H₂O), separating the reformed gas into a reduction gas and hydrogen gas (H₂), reducing ferric oxide (Fe₂O₃) into ferrous oxide (FeO) using the reduction gas, and producing ferrous-ferric oxide (Fe₃O₄) and hydrogen gas (H₂) by allowing the reduced ferrous oxide to react with steam (H₂O). In the step of generating the reformed gas, the concentration of hydrogen gas (H₂) in the reformed gas may be higher than that of hydrogen gas (H₂) in the byproduct gas.

The step of generating the reformed gas may be performed using the reformer 50, and the step of separating the reformed gas into the reduction gas and the hydrogen gas (H₂) is performed using the separator 70.

Moreover, the step of reducing ferric oxide (Fe₂O₃) into ferrous oxide (FeO) may be performed using the first reactor 100. More specifically, the step of reducing ferric oxide (Fe₂O₃) into ferrous oxide (FeO) may include the reaction represented by Scheme 1 below.

[Scheme 1] 4Fe₂O₃ + CH₄ → 8FeO + 2 H₂O + CO₂

In Scheme 1, methane (CH₄) may function as a reducing agent, and in the hydrogen production system and method according to the present disclosure, the methane (CH₄) conversion rate may be 85% or more, but is not limited thereto.

Also, the step of producing the ferrous-ferric oxide (Fe₃O₄) and the hydrogen gas (H₂) may be performed using the second reactor 200. More specifically, the step of producing the ferrous-ferric oxide (Fe₃O₄) and the hydrogen gas (H₂) may include the reaction represented by Scheme 2 below.

[Scheme 2] 8FeO + 8/3 H₂O → 8/3 Fe₃O₄ + 8/3 H₂

In the step of reducing ferric oxide (Fe₂O₃) into ferrous oxide (FeO) using the generated reduction gas, a portion of the ferric oxide (Fe₂O₃) may include ferric oxide obtained by mixing oxygen (O₂) with ferrous-ferric oxide (Fe₃O₄) resulting from the step of producing ferrous-ferric oxide (Fe₃O₄) and hydrogen gas (H₂). More specifically, ferrous-ferric oxide (Fe₃O₄) and oxygen (O₂), which are mixed, may be formed into ferric oxide (Fe₂O₃) through the reaction represented by Scheme 3 below.

[Scheme 3] 8/3 Fe₃O₄ + 2/3 O₂ → 4Fe₂O₃

Also, mixing of ferrous-ferric oxide (Fe₃O₄) with oxygen (O₂) may be conducted using the third reactor 300.

Thus, the overall process including oxidation and reduction using the first reactor 100, the second reactor 200, and the third reactor 300 may be performed as represented by Scheme 4 below.

[Scheme 4] First reactor: 4Fe₂O₃ + CH₄ → 8FeO + 2H₂O + CO₂

Second reactor: 8FeO + 8/3 H₂O → 8/3 Fe₃O₄ + 8/3 H₂
Third reactor: 8/3 Fe₃O₄ + 2/3 O₂ → 4Fe₂O₃
Overall process reaction: CH₄ + 2/3 H₂ + 2/3 O₂ → 8/3 H₂ + CO₂

The internal temperature of the reformer 50 may be 600°C or higher. For example, the internal temperature of the reformer 50 may fall in the range of 600°C to 900°C. In one aspect, the internal temperature of the reformer 50 is 700°C or higher. For example, the internal temperature of the reformer 50 may fall in the range of 700°C to 900°C. Thus, in the hydrogen production method according to the present disclosure, the step of generating the reformed gas may be performed at a temperature of 600°C to 900°C.

In the hydrogen production system 1 according to a form of the present disclosure, the separator 70 may further include a pressure swing adsorption (PSA) unit. Accordingly, the step of separating the reformed gas into the reduction gas and the hydrogen gas (H₂) may include a PSA process. Specifically, hydrogen (H₂) is strongly adsorbed from the reformed gas supplied from the reformer 50 using an adsorbent (or a membrane) selected under increased pressure compared to other components, thereby separating hydrogen (H₂). For example, the separation efficiency of the adsorbent may be 80% or more, and thus the recovery rate of hydrogen (H₂) that is separated may be 80% or more. Furthermore, PSA may be performed under increased pressure of 10 bar.

In the hydrogen production system 1 according to the present disclosure, a portion of the steam (H₂O) fed to the second reactor 200 may be supplied from the first reactor 100. Specifically, during the production of ferrous-ferric oxide (Fe₃O₄) and hydrogen gas (H₂) by reacting the reduced ferrous oxide with steam (H₂O), a portion of the steam (H₂O) may include steam resulting from the step of reducing ferric oxide (Fe₂O₃) into ferrous oxide (FeO). Accordingly, the steam (H₂O) formed through the reaction of the first reactor 100 (Scheme 1) is supplied to the second reactor 200, and is thus used for the reaction of the second reactor 200 (Scheme 2), thereby reducing the supply of steam (H₂O) from the outside, and thus the hydrogen production system 1 may be made more environmentally friendly by increasing the production efficiency using limited resources.

The byproduct gas includes coke oven gas (COG). The COG may include the gas composition shown in Table 1 below.

**[Table 1]**

| Hydrogen (H₂) | Methane (CH₄) | Carbon monoxide (CO) | Nitrogen (N₂) | Carbon dioxide (CO₂) | Ethylene (C₂H₄) | Oxygen (O₂) |
|---|---|---|---|---|---|---|
| 58.32 | 26.06 | 6.74 | 4.22 | 2.07 | 1.84 | 0.75 |
| 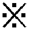 Composition unit: vol.% | | | | | | |

In order to increase the production efficiency of hydrogen (H₂), a steam-to-carbon ratio (SCR) (H₂O/CH₄) in the byproduct gas used in the hydrogen production system 1 according to the present disclosure may be 2.5 to 3.5. In one aspect, the SCR (H₂O/CH₄) may be 3.0.

In the step of separating the reformed gas into the reduction gas and the hydrogen gas (H₂) in the hydrogen production method according to the present disclosure, the reduction gas may include at least one selected from the group consisting of hydrogen gas (H₂), carbon monoxide (CO), methane gas (CH₄) and combinations thereof. Thus, in the hydrogen production system 1 according to the present disclosure, the reduction gas separated from the reformed gas using the separator 70 may include at least one selected from the group consisting of hydrogen gas (H₂), carbon monoxide (CO), methane gas (CH₄) and combinations thereof.

A better understanding of the present disclosure will be given through the following Examples and Comparative Examples. However, the following Examples are set forth to illustrate the present disclosure but are not to be construed as limiting the scope of the present disclosure.

### Example 1

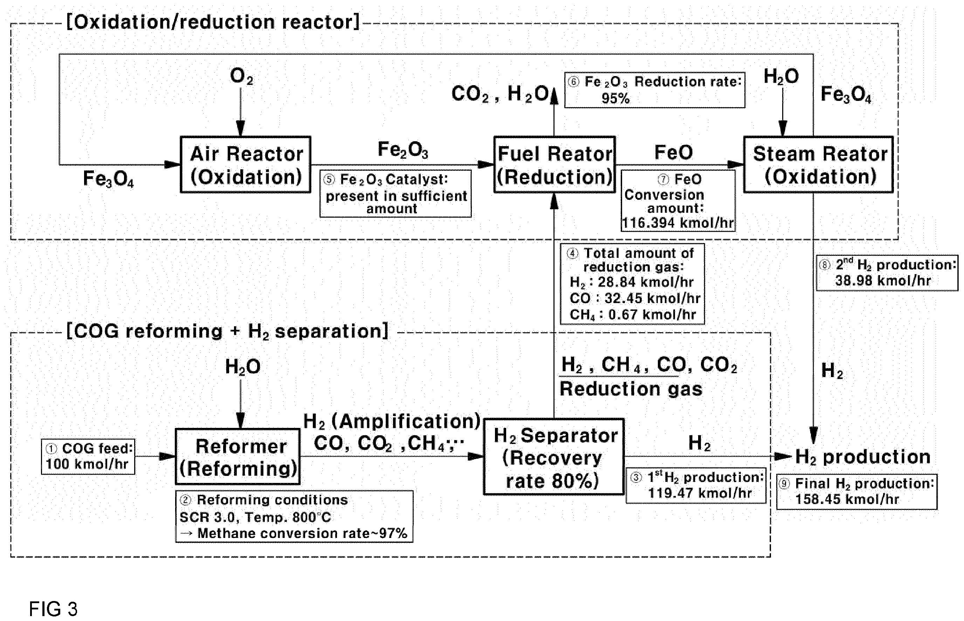

With reference to FIG. 3, in Example 1, 100 kmol/hr of COG, serving as a byproduct gas, was fed to a reformer. Here, the COG had a gas composition as shown in Table 1 .

Using the reformer, the COG was reformed under conditions of a SCR (H₂O/CH₄) of 3.0, a reaction temperature of 800°C, and a reaction pressure of 1 atm, thus generating a reformed gas whose hydrogen (H₂) concentration was amplified (methane (CH₄) conversion rate: ∼97%).

The resulting reformed gas was transferred from the reformer into a separator (using PSA, membrane efficiency: 80%, pressure: 10 bar), thus primarily separating 119.47 kmol/hr of hydrogen (H₂) (recovery rate: 80%).

The reduction gas (including 28.84 kmol/hr of hydrogen gas (H₂), 32.45 kmol/hr of carbon monoxide (CO), and 0.67 kmol/hr of methane gas (CH₄)), which was not separated but remained in the reformer, was transferred to a fuel reactor, and was then allowed to react with a sufficient amount of a ferric oxide (Fe₂O₃) catalyst (i.e. an amount able to sufficiently use the supplied reduction gas) introduced into the fuel reactor (a Gibbs reactor) at a reaction temperature of 800°C and a reaction pressure of 1 atm. For example, 116.94 kmol/hr of ferrous oxide (FeO) was formed through reaction with 30 kmol/hr of the ferric oxide (Fe₂O₃) catalyst (a reduction reaction, Fe₂O₃ reduction rate: 95%).

The ferrous oxide (FeO) formed in the fuel reactor was transferred to a steam reactor, and was then allowed to react with steam (H₂O) to produce ferrous-ferric oxide (Fe₃O₄) and hydrogen gas (H₂), thereby secondarily separating 38.98 kmol/hr of hydrogen gas (H₂). Here, a portion of the steam (H₂O) fed to the steam reactor may be obtained from the fuel reactor.

The amounts of the components fed to the respective units are shown in Table 2 below.

**[Table 2]**

| Composition | Reformer inlet | Reformer outlet | Fuel reactor inlet | Fuel reactor outlet |
|---|---|---|---|---|
| H₂ | 59.45 | 149.34 | 28.84 | 0.14 |
| CO₂ | 2.06 | 8.78 | 4.91 | 37.85 |
| CO | 6.83 | 29.00 | 29.00 | 0.18 |
| H₂O | 76.89 | 41.27 | - | - |
| N₂ | 4.27 | 4.27 | 4.27 | 4.27 |
| CH₄ | 25.63 | 0.67 | 0.67 | 2.04E-10 |
| FeO | 0 | 0 | 0 | 116.94 |
| Fe₂O₃ | 0 | 0 | 60 | 0.62 |
| C₂H₄ | 1.76 | 2.67E-07 | 2.67E-07 | 3.44E-22 |
| O₂ | 0 | 8.01E-18 | 0 | 1.18E-11 |
| Total Flow | 176.89 | 233.33 | 131.14 | 160 |
| 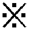 Inlet and outlet units: kmol/hr | | | | |
| 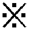 COG gas has a composition excluding water vapor(H2O) from the reformer intake amount. | | | | |
| 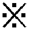 Process simulation was performed for chemistry processes including COG gas reforming process and actual iron oxide reduction process. | | | | |
| 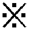 Production of about 150 kmol/hr of hydrogen from 100 kmol/hr of COG was confirmed. | | | | |
| 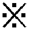 Conversion of 60 kmol/hr of Fe₂O₃ into about 116.94 kmol/hr of FeO through reduction was confirmed. | | | | |

Also, ferrous-ferric oxide (Fe₃O₄) formed in the steam reactor was transferred to an air reactor, and was then allowed to react with oxygen (O₂), thus obtaining ferric oxide (Fe₂O₃). Furthermore, a looping process was performed in a manner in which ferric oxide (Fe₂O₃) formed in the steam reactor was transferred again to the fuel reactor and allowed to react with the added reduction gas (H₂, CH₄, CO).

Consequently, the total amount of hydrogen (H₂) that was primarily and secondarily produced was 158.45 kmol/hr.

### Comparative Example 1

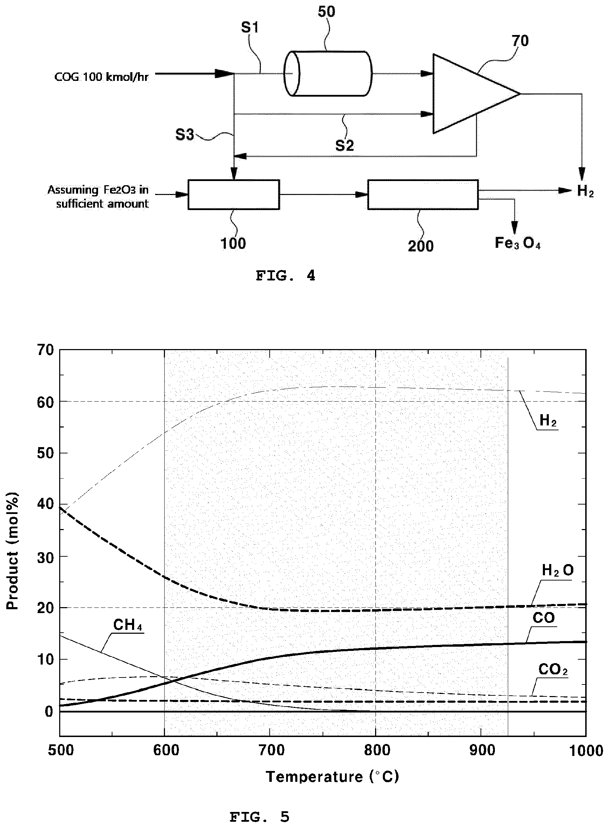

With reference to FIG. 4, the reformer 50 was not used in Comparative Example 1, unlike Example 1, in which primary separation of hydrogen (S1) was performed using the reformer and the separator. Thus, COG was not reformed with steam (H₂O), but 47.56 kmol/hr of hydrogen (H₂) was primarily produced directly from COG using the separator 70 (S2), and 76.79 kmol/hr of hydrogen (H₂) was secondarily produced by feeding the separated residual reduction gas (including 11.89 kmol/hr of hydrogen gas (H₂), 6.83 kmol/hr of carbon monoxide (CO), and 25.63 kmol/hr of methane gas (CH₄)) to oxidation and reduction reactors 100, 200 (S2).

Consequently, the total amount of hydrogen (H₂) that was primarily and secondarily produced was 124.35 kmol/hr.

### Comparative Example 2

With reference to FIG. 4, the reformer 50 and the separator 70 were not used in Comparative Example 2, unlike S1 of Example 1 or S2 of Comparative Example 1. Thus, COG (including 59.45 kmol/hr of hydrogen gas (H₂), 6.83 kmol/hr of carbon monoxide (CO), and 25.63 kmol/hr of methane gas (CH₄)), serving as a reduction gas, was directly fed to oxidation and reduction reactors 100, 200, thus producing 106.91 kmol/hr of hydrogen (H₂) (S3).

### Evaluation Example 1: Total amount of hydrogen (H₂) produced

The total amounts of hydrogen (H₂) produced in Example 1 and Comparative Examples 1 and 2 are shown in Table 3 below.

**[Table 3]**

| | Primarily produced H₂ (kmol/hr) | Secondarily produced H₂ (kmol/hr) | Total H₂ (kmol/hr) |
|---|---|---|---|
| Example 1 | 119.47 | 38.98 | 158.45 |
| Comparative Example 1 | 47.56 | 76.79 | 124.35 |
| Comparative Example 2 | 0 | 106.91 | 106.91 |

Therefore, hydrogen (H₂) was produced at the highest yield (158.45 kmol/hr) in Example 1, in which hydrogen was primarily produced using both the reformer and the separator and hydrogen was secondarily produced using a redox process.

Evaluation Example 2: Evaluation of yield of hydrogen (H₂) depending on temperature

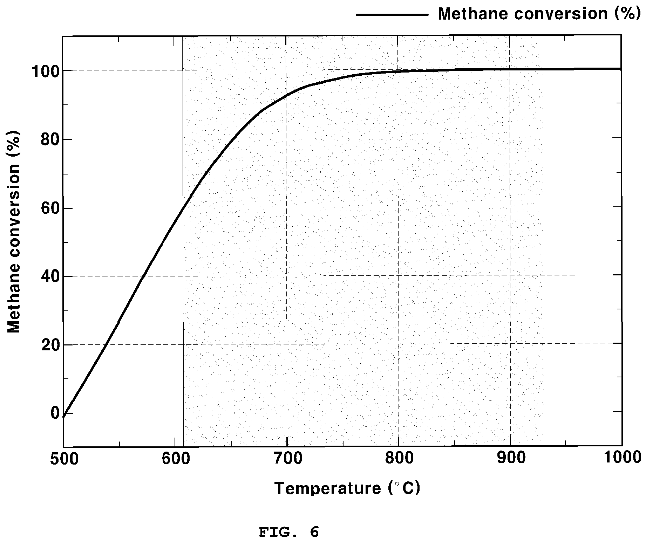

In order to evaluate the yield of hydrogen (H₂) depending on the temperature in the reforming process, the reforming process was performed using COG of Table 1 under the same conditions as in Example 1. Here, among the operation conditions of the reformer, the temperature was changed from 500°C to 1000°C. The composition of the resulting reformed gas is shown FIG. 5, and the results of the methane (CH₄) conversion rate are shown in FIG. 6.

With reference to FIG. 5, the composition and a high hydrogen (H₂) yield were obtained at, in one aspect, 600°C or higher, and in one aspect between 600°C to 900°C. With reference to FIG. 6, the methane (CH₄) conversion rate was about 80% or more at, in one apsect,600°C or higher. The yield of hydrogen (H₂) was confirmed through thermodynamic calculation.

Evaluation Example 3: Verification of reforming performance of COG depending on temperature

### Verification tester

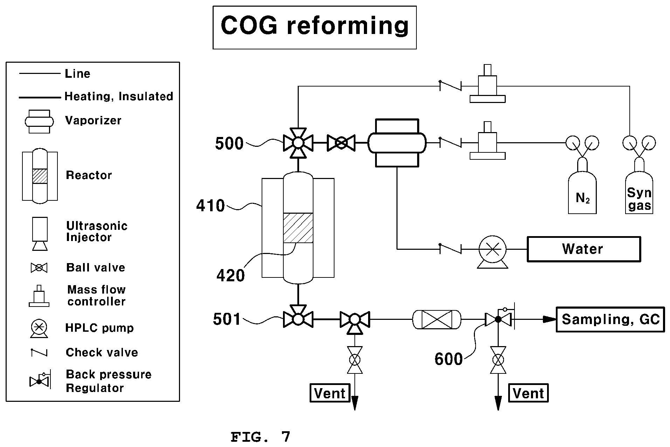

With reference to FIG. 7, a tester for verifying the reforming performance of the byproduct gas (COG) is shown. Such a tester may be configured to include a COG reformer 410, a temperature detector 420, pressure detectors 500, 501, and a back pressure regulator 600.

### Verification of reforming performance

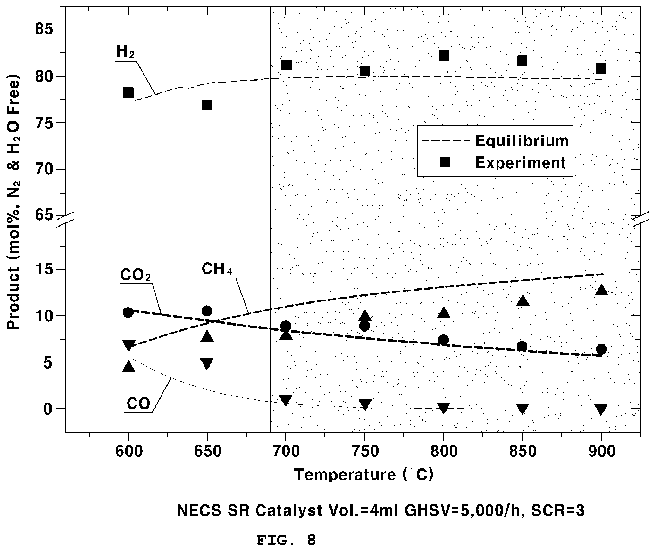

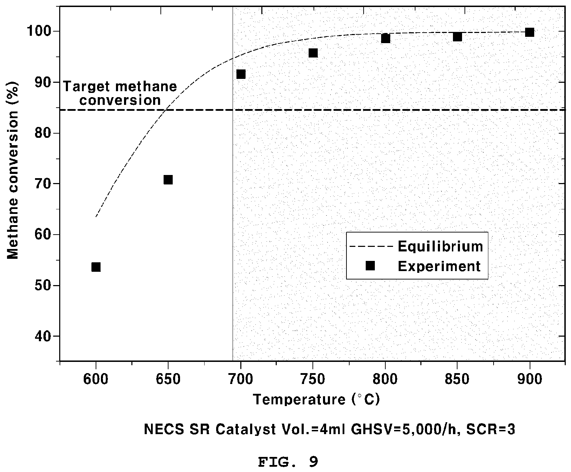

The thermodynamic composition and the methane (CH₄) conversion rate depending on the temperature using the verification tester are shown in FIGS. 8 and 9, respectively. Here, the test conditions were as follows: 4 ml of a steam reforming (SR) catalyst, a gas hourly space velocity (GHSV) of 5000/h, and a steam-to-carbon ratio (SCR, H₂O/ CH₄) of 3.0.

With reference to FIG. 8, reforming performance close to the thermodynamic equilibrium value was confirmed from a temperature of, in one aspect, 700°C (hydrogen (H₂) yield: ∼80 %, dry basis).

With reference to FIG. 9, the methane (CH₄) conversion rate was 90% or more at a temperature of 700°C or higher, from which it was confirmed that the target methane (CH₄) conversion rate exceeded 85%.

Evaluation Example 4: Verification of redox reaction using oxidation and reduction reactors

In order to evaluate the applicability to an oxidation reactor and a reduction reactor (e. G., a fuel reactor and a steam reactor), reduction reactor testing was performed using a ferric oxide (Fe₂O₃) reference material. Based on the test results, process design parameters for ferric oxide (Fe₂O₃) application in the process of the present disclosure were derived.

### Reduction reactor test conditions

Table 4 below shows the absolute amount of the reactive gas, and Table 5 below shows the detailed test conditions.

**[Table 4]**

| Composition | Blank Reactor (mmol/min) |
|---|---|
| H₂ | 0.211 |
| CO₂ | 0.045 |
| CO | 0.286 |
| H₂O | - |
| N₂ | 0.045 |
| CH₄ | 0.001 |

**[Table 5]**

| | Test conditions |
|---|---|
| Catalyst amount | 23.4g / 15mL |
| GHSV | 75/h |
| Temperature | 830°C |
| Measurement | Real-time measurement with uGC |
| Catalyst | Fe₂O₃ |
| Moisture | Removal with moisture absorbent |

### Verification results of reduction reaction

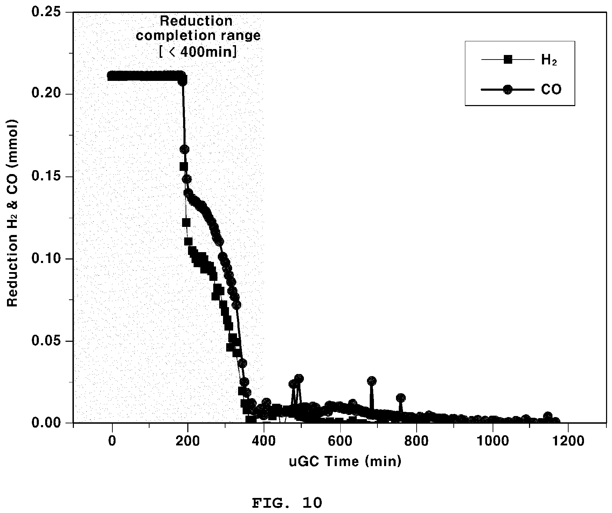

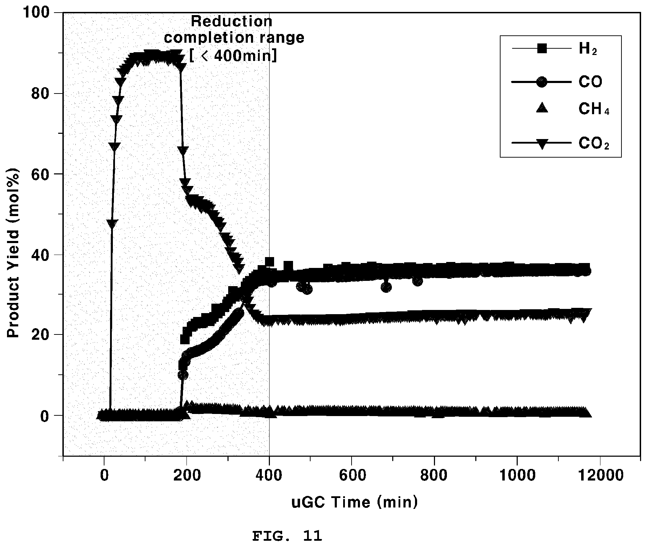

The absolute amounts of hydrogen (H₂) and carbon monoxide (CO) used in the reduction are shown in FIG. 10, and the reduction reactor test results are shown in FIG. 11.

With reference to FIG. 10, 4.78 mmol/g of the reduction gas was used for catalyst reduction. In the case of a ferric oxide (Fe₂O₃) reference material, 5.0 mmol/g of ferric oxide (Fe₂O₃) participated in reduction by a stoichiometric ratio of about 0.95. Thus, process design parameters may be presented based on the above test results. The absolute amounts of gases used in the reduction reaction are shown in Table 7 below.

**[Table 7]**

| | Total Reduction Gas (mmol) |
|---|---|
| H₂ | 50.75 |
| CO | 61.27 |
| Tot. | 112.02 |
| Result | 4.78 mmol/g catal. |

Therefore, in the hydrogen production system and method according to the present disclosure, the byproduct gas (especially, COG) was reformed under conditions of the specific SCR (H₂O/CH₄), reaction temperature and pressure using the reformer, thus generating a reformed gas whose hydrogen (H₂) concentration was amplified (methane (CH₄) conversion rate: ∼97%), from which hydrogen (H₂) was then separated, thus primarily producing hydrogen (H₂) at a high yield (i.e. 80%).

Moreover, in the reforming process, the residual reduction gas (including hydrogen gas (H₂), carbon monoxide (CO) and methane gas (CH₄)) was transferred to the oxidation and reduction reactors, followed by reaction with the ferric oxide (Fe₂O₃) catalyst in a sufficient amount thereof at a specific reaction temperature and pressure, whereby the reduction was progressed to form ferrous oxide (FeO) at a high yield. The ferrous oxide (FeO) thus obtained was allowed to react with steam (H₂O) to afford ferrous-ferric oxide (Fe₃O₄) and hydrogen gas (H₂), whereby hydrogen gas (H₂) was secondarily separated. Accordingly, hydrogen (H₂) was produced at a high yield through this dual process.

As a portion of the steam (H₂O) fed to the steam reactor, steam resulting from the reduction reaction may be recycled, thereby producing environmentally friendly hydrogen (H₂).

Although forms of the present disclosure have been described with reference to the accompanying drawings, those skilled in the art will appreciate that the present disclosure may be embodied in other specific forms without changing the technical features thereof. Thus, such modifications should not be understood individually from the technical ideas or views of the present disclosure.

## Claims

1. A system for producing hydrogen from a byproduct gas generated during a steelmaking process or a coal chemistry process, the system comprising:
a reformer for reforming the byproduct gas using steam (H₂O);
a separator for separating a reformed gas supplied from the reformer into a reduction gas and hydrogen gas (H₂);
a first reactor for reducing ferric oxide (Fe₂O₃) into ferrous oxide (FeO) using the reduction gas supplied from the separator; and
a second reactor for producing ferrous-ferric oxide (Fe₃O₄) and hydrogen gas (H₂) by mixing the ferrous oxide (FeO) supplied from the first reactor with steam (H₂O),
wherein a concentration of hydrogen gas (H₂) in the reformed gas discharged from the reformer is higher than a concentration of hydrogen gas (H₂) in the byproduct gas,
wherein the byproduct gas includes coke oven gas comprising hydrogen, methane, carbon monoxide, nitrogen, carbon dioxide, ethylene and oxygen.

2. The system of claim 1, further comprising a third reactor, which is connected to the first reactor and the second reactor,
wherein the third reactor is configured such that the ferrous-ferric oxide (Fe₃O₄) supplied from the second reactor is mixed with oxygen (O₂) and is thus oxidized into ferric oxide (Fe₂O₃) and supplied to the first reactor.

3. The system of claim 1 or 2, wherein an internal temperature of the reformer is 600°C to 900°C.

4. The system of one of claims 1-3, wherein the separator includes a pressure swing adsorption (PSA) unit.

5. The system of one of claims 1-4, wherein a portion of the steam (H₂O) fed to the second reactor is supplied from the first reactor.

6. The system of one of claims 1-5,
wherein, in the byproduct gas, a steam-to-carbon ratio (H₂O/CH₄) is 2.5 to 3.5.

7. The system of one of claims 1-6, wherein the reduction gas includes at least one selected from the group consisting of hydrogen gas (H₂), carbon monoxide (CO), methane gas (CH₄) and combinations thereof.

8. A method of producing hydrogen, comprising:
generating a reformed gas by reforming a byproduct gas generated during a steelmaking process or a coal chemistry process with steam (H₂O);
separating the reformed gas into a reduction gas and hydrogen gas (H₂);
reducing ferric oxide (Fe₂O₃) into ferrous oxide (FeO) using the reduction gas; and
producing ferrous-ferric oxide (Fe₃O₄) and hydrogen gas (H₂) by reacting the ferrous oxide with steam (H₂O),
wherein, in the generating the reformed gas, a concentration of hydrogen gas (H₂) in the reformed gas is higher than a concentration of hydrogen gas (H₂) in the byproduct gas,
wherein the byproduct gas includes coke oven gas comprising hydrogen, methane, carbon monoxide, nitrogen, carbon dioxide, ethylene and oxygen.

9. The method of claim 8, wherein the reducing the ferric oxide (Fe₂O₃) into the ferrous oxide (FeO) includes a reaction represented by Scheme 1 below:
[Scheme 1] 4Fe₂O₃ + CH₄ → 8FeO + 2H₂O + CO₂.

10. The method of claim 8 or 9, wherein the producing the ferrous-ferric oxide (Fe₃O₄) and the hydrogen gas (H₂) includes a reaction represented by Scheme 2 below:
[Scheme 2] 8FeO + 8/3 H₂O → 8/3 Fe₃O₄ + 8/3 H₂.

11. The method of one of claims 8-10, wherein, in the reducing the ferric oxide (Fe₂O₃) into the ferrous oxide (FeO) using the reduction gas, a portion of the ferric oxide (Fe₂O₃) includes ferric oxide obtained by mixing oxygen (O₂) with ferrous-ferric oxide (Fe₃O₄) resulting from the producing the ferrous-ferric oxide (Fe₃O₄) and the hydrogen gas (H₂), wherein, optionally, the ferrous-ferric oxide (Fe₃O₄) and the oxygen (O₂), which are mixed, are formed into ferric oxide (Fe₂O₃) through a reaction represented by Scheme 3 below:
[Scheme 3] 8/3 Fe₃O₄ + 2/3 O₂ →- 4Fe₂O₃.

12. The method of one of claims 8-11, wherein the separating the reformed gas into the reduction gas and the hydrogen gas (H₂) includes a pressure swing absorption (PSA) process.

13. The method of one of claims 8-12, wherein the generating the reformed gas is performed at a temperature of 600°C to 900°C.

14. The method of one of claims 8-13,
wherein, in the byproduct gas, a steam-to-carbon ratio (H₂O/CH₄) is 2.5 to 3.5.

15. The method of one of claims 8-14,
wherein the reduction gas includes at least one selected from the group consisting of hydrogen gas (H₂), carbon monoxide (CO), methane gas (CH₄) and combinations thereof, and/or wherein, in the producing the ferrous-ferric oxide (Fe₃O₄) and the hydrogen gas (H₂), a portion of the steam (H₂O) includes steam resulting from the reducing the ferric oxide (Fe₂O₃) into the ferrous oxide (FeO).

## Patentansprüche

1. System zum Herstellen von Wasserstoff aus einem Nebenproduktgas, das während eines Stahlherstellungsprozesses oder eines carbochemischen Prozesses erzeugt wird, wobei das System aufweist:
einen Reformer zum Reformieren des Nebenproduktgases mittels Dampf (H₂O);
einen Separator zum Trennen eines vom Reformer zugeführten reformierten Gases in ein Reduktionsgas und Wasserstoffgas (H₂);
einen ersten Reaktor zum Reduzieren von Eisen(III)-oxid (Fe₂O₃) zu Eisen(II)-oxid (FeO) unter Verwendung des von dem Separator zugeführten Reduktionsgases; und
einen zweiten Reaktor zum Erzeugen von Eisen(II,III)-oxid (Fe₃O₄) und Wasserstoffgas (H₂) durch Mischen des von dem ersten Reaktor zugeführten Eisen(II)-oxids (FeO) mit Dampf (H₂O),
wobei eine Konzentration von Wasserstoffgas (H₂) in dem von dem Reformer abgegebenen reformierten Gas höher als eine Konzentration von Wasserstoffgas (H₂) in dem Nebenproduktgas ist,
wobei das Nebenproduktgas Koksofengas enthält, das Wasserstoff, Methan, Kohlenstoffmonoxid, Stickstoff, Kohlenstoffdioxid, Ethylen und Sauerstoff aufweist.

2. System gemäß Anspruch 1, ferner aufweisend einen dritten Reaktor, der mit dem ersten Reaktor und dem zweiten Reaktor verbunden ist,
wobei der dritte Reaktor derart konfiguriert ist, dass das Eisen(II,III)-oxid (Fe₃O₄), das von dem zweiten Reaktor zugeführt wird, mit Sauerstoff (O₂) gemischt und somit zu Eisen(III)-oxid (Fe₂O₃) oxidiert und dem ersten Reaktor zugeführt wird.

3. System gemäß Anspruch 1 oder 2, wobei eine Innentemperatur des Reformers 600°C bis 900°C beträgt.

4. System gemäß einem der Ansprüche 1 bis 3, wobei der Separator eine Druckwechseladsorptionseinheit (PSA) aufweist.

5. System gemäß einem der Ansprüche 1 bis 4, wobei ein Teil des dem zweiten Reaktor zugeführten Dampfes (H₂O) aus dem ersten Reaktor zugeführt wird.

6. System gemäß einem der Ansprüche 1 bis 5,
wobei in dem Nebenproduktgas ein Dampf-Kohlenstoff-Verhältnis (H₂O/CH₄) 2,5 bis 3,5 beträgt.

7. System gemäß einem der Ansprüche 1 bis 6, wobei das Reduktionsgas mindestens eines aufweist, das aus der Gruppe bestehend aus Wasserstoffgas (H₂), Kohlenstoffmonoxid (CO), Methangas (CH₄) und Kombinationen davon ausgewählt ist.

8. Verfahren zum Herstellen von Wasserstoff, aufweisend:
Erzeugen eines reformierten Gases durch Reformieren eines während eines Stahlherstellungsprozesses oder eines carbochemischen Prozesses erzeugten Nebenproduktgases mit Dampf (H₂O);
Trennen des reformierten Gases in ein Reduktionsgas und Wasserstoffgas (H₂);
Reduzieren von Eisen(III)-oxid (Fe₂O₃) zu Eisen(II)-oxid (FeO) unter Verwendung des Reduktionsgases; und
Herstellen von Eisen(II,III)-oxid (Fe₃O₄) und Wasserstoffgas (H₂) durch Reaktion des Eisen(II)-oxids mit Dampf (H₂O),
wobei beim Erzeugen des reformierten Gases eine Konzentration von Wasserstoffgas (H₂) in dem reformierten Gas höher als eine Konzentration von Wasserstoffgas (H₂) in dem Nebenproduktgas ist,
wobei das Nebenproduktgas Koksofengas enthält, das Wasserstoff, Methan, Kohlenstoffmonoxid, Stickstoff, Kohlenstoffdioxid, Ethylen und Sauerstoff aufweist.

9. Verfahren gemäß Anspruch 8, wobei das Reduzieren von Eisen(III)-oxid (Fe₂O₃) zu Eisen(II)-oxid (FeO) eine durch das folgende Schema 1 dargestellte Reaktion aufweist:
[Schema 1] 4Fe₂O₃ + CH₄ → 8FeO + 2H₂O + CO₂.

10. Verfahren gemäß Anspruch 8 oder 9, wobei das Herstellen des Eisen(II,III)-oxids (Fe₃O₄) und des Wasserstoffgases (H₂) eine durch das folgende Schema 2 dargestellte Reaktion aufweist:
[Schema 2] 8FeO + 8/3 H₂O → 8/3 Fe₃O₄ + 8/3 H₂.

11. Verfahren gemäß einem der Ansprüche 8 bis 10, wobei beim Reduzieren des Eisen(III)-oxids (Fe₂O₃) zu Eisen(II)-oxid (FeO) unter Verwendung des Reduktionsgases ein Teil des Eisen(III)-oxids (Fe₂O₃) Eisen(III)-oxid aufweist, das durch Mischen von Sauerstoff (O₂) mit Eisen(II,III)-oxid (Fe₃O₄), das aus dem Herstellen des Eisen(II,III)-oxids (Fe₃O₄) und des Wasserstoffgases (H₂) resultiert, erhalten wird, wobei optional das Eisen(II,III)-oxid (Fe₃O₄) und der Sauerstoff (O2), die gemischt werden, durch eine Reaktion, die durch das folgende Schema 3 dargestellt ist, zu Eisen(III)-oxid (Fe₂O₃) gebildet werden:
[Schema 3] 8/3 Fe₃O₄ + 2/3 O₂ → 4Fe₂O₃.

12. Verfahren gemäß einem der Ansprüche 8 bis 11, wobei das Trennen des reformierten Gases in das Reduktionsgas und das Wasserstoffgas (H₂) ein Druckwechseladsorptionsverfahren (PSA) aufweist.

13. Verfahren gemäß einem der Ansprüche 8 bis 12, wobei das Erzeugen des reformierten Gases bei einer Temperatur von 600°C bis 900°C durchgeführt wird.

14. Verfahren gemäß einem der Ansprüche 8 bis 13,
wobei in dem Nebenproduktgas ein Dampf-Kohlenstoff-Verhältnis (H₂O/CH₄) 2,5 bis 3,5 beträgt.

15. Verfahren gemäß einem der Ansprüche 8 bis 14,
wobei das Reduktionsgas mindestens eines aufweist, das aus der Gruppe bestehend aus Wasserstoffgas (H₂), Kohlenstoffmonoxid (CO), Methangas (CH₄) und Kombinationen davon ausgewählt wird, und/oder wobei, beim Herstellen des Eisen(II,III)-oxids (Fe₃O₄) und des Wasserstoffgases (H₂) ein Teil des Dampfes (H₂O) Dampf aufweist, der aus dem Reduzieren des Eisen(III)-oxids (Fe₂O₃) zu Eisen(II)-oxid (FeO) resultiert.

## Revendications

1. Système de production d'hydrogène à partir d'un gaz de sous-produit généré au cours d'un processus de fabrication d'acier ou un processus de carbochimie, le système comprenant :
un reformeur pour reformer le gaz de sous-produit à l'aide de vapeur (H₂O) ;
un séparateur pour séparer un gaz reformé fourni depuis le reformeur en un gaz de réduction et en hydrogène gazeux (H₂) ;
un premier réacteur pour réduire de l'oxyde ferrique (Fe₂O₃) en oxyde ferreux (FeO) à l'aide du gaz de réduction fourni depuis le séparateur ; et
un deuxième réacteur pour produire de l'oxyde ferreux-ferrique (Fe₃O₄) et de l'hydrogène gazeux (H₂) par mélange de l'oxyde ferreux (FeO) fourni depuis le premier réacteur avec de la vapeur (H₂O),
dans lequel une concentration en hydrogène gazeux (H₂) dans le gaz reformé évacué du reformeur est plus élevée qu'une concentration en hydrogène gazeux (H₂) dans le gaz de sous-produit,
dans lequel le gaz de sous-produit comporte du gaz de cokerie comprenant de l'hydrogène, du méthane, du monoxyde de carbone, de l'azote, du dioxyde de carbone, de l'éthylène et de l'oxygène.

2. Système selon la revendication 1, comprenant en outre un troisième réacteur, qui est relié au premier réacteur et au deuxième réacteur,
dans lequel le troisième réacteur est configuré de sorte que l'oxyde ferreux-ferrique (Fe₃O₄) fourni depuis le deuxième réacteur soit mélangé avec de l'oxygène (O2) et soit ainsi oxydé en oxyde ferrique (Fe₂O₃) et fourni au premier réacteur.

3. Système selon la revendication 1 ou 2, dans lequel une température interne du reformeur est de 600 °C à 900 °C.

4. Système selon l'une des revendications 1 à 3, dans lequel le séparateur comporte une unité d'adsorption par inversion de pression (PSA).

5. Système selon l'une des revendications 1 à 4, dans lequel une portion de la vapeur (H₂O) apportée au deuxième réacteur est fournie depuis le premier réacteur.

6. Système selon l'une des revendications 1 à 5,
dans lequel, dans le gaz de sous-produit, un rapport vapeur-carbone (H₂O/CH₄) est de 2,5 à 3,5.

7. Système selon l'une des revendications 1 à 6, dans lequel le gaz de réduction comporte au moins un élément choisi dans le groupe constitué par l'hydrogène gazeux (H₂), le monoxyde de carbone (CO), le méthane gazeux (CH₄) et des combinaisons de ceux-ci.

8. Procédé de production d'hydrogène, comprenant :
la génération d'un gaz reformé par reformage d'un gaz de sous-produit généré au cours d'un processus de fabrication d'acier ou d'un processus de carbochimie avec de la vapeur (H₂O) ;
la séparation du gaz reformé en un gaz de réduction et en hydrogène gazeux (H₂) ;
la réduction d'oxyde ferrique (Fe₂O₃) en oxyde ferreux (FeO) à l'aide du gaz de réduction ; et
la production d'oxyde ferreux-ferrique (Fe₃O₄) et d'hydrogène gazeux (H₂) par réaction de l'oxyde ferreux avec de la vapeur (H₂O),
dans lequel, dans la génération du gaz reformé, une concentration en hydrogène gazeux (H₂) dans le gaz reformé est plus élevée qu'une concentration en hydrogène gazeux (H₂) dans le gaz de sous-produit,
dans lequel le gaz de sous-produit comporte du gaz de cokerie comprenant de l'hydrogène, du méthane, du monoxyde de carbone, de l'azote, du dioxyde de carbone, de l'éthylène et de l'oxygène.

9. Procédé selon la revendication 8, dans lequel la réduction de l'oxyde ferrique (Fe₂O₃) en oxyde ferreux (FeO) comporte une réaction représentée par le schéma 1 ci-dessous :
[Schéma 1] 4Fe₂O₃ + CH₄ → 8FeO + 2H₂O + CO₂.

10. Procédé selon la revendication 8 ou 9, dans lequel la production de l'oxyde ferreux-ferrique (Fe₃O₄) et de l'hydrogène gazeux (H₂) comporte une réaction représentée par le schéma 2 ci-dessous :
[Schéma 2] 8FeO + 8/3 H₂O → 8/3 Fe₃O₄ + 8/3 H₂.

11. Procédé selon l'une des revendications 8 à 10, dans lequel, dans la réduction de l'oxyde ferrique (Fe₂O₃) en oxyde ferreux (FeO) à l'aide du gaz de réduction, une portion de l'oxyde ferrique (Fe₂O₃) comporte de l'oxyde ferrique obtenu par mélange d'oxygène (O₂) avec de l'oxyde ferreux-ferrique (Fe₃O₄) résultant de la production de l'oxyde ferreux-ferrique (Fe₃O₄) et de l'hydrogène gazeux (H₂), dans lequel, éventuellement, l'oxyde ferreux-ferrique (Fe₃O₄) et l'oxygène (O₂), qui sont mélangés, sont formés en oxyde ferrique (Fe₂O₃) par le biais d'une réaction représentée par le schéma 3 ci-dessous :
[Schéma 3] 8/3 Fe₃O₄ + 2/3 O₂ → 4Fe₂O₃.

12. Procédé selon l'une des revendications 8 à 11, dans lequel la séparation du gaz reformé en gaz de réduction et en hydrogène gazeux (H₂) comporte un processus d'adsorption par inversion de pression (PSA).

13. Procédé selon l'une des revendications 8 à 12, dans lequel la génération du gaz reformé est réalisée à une température de 600 °C à 900 °C.

14. Procédé selon l'une des revendications 8 à 13,
dans lequel, dans le gaz de sous-produit, un rapport vapeur-carbone (H₂O/CH₄) est de 2,5 à 3,5.

15. Procédé selon l'une des revendications 8 à 14,
dans lequel le gaz de réduction comporte au moins un élément choisi dans le groupe constitué par l'hydrogène gazeux (H₂), le monoxyde de carbone (CO), le méthane gazeux (CH₄) et des combinaisons de ceux-ci, et/ou dans lequel, dans la production de l'oxyde ferreux-ferrique (Fe₃O₄) et de l'hydrogène gazeux (H₂), une portion de la vapeur (H₂O) comporte de la vapeur résultante de la réduction de l'oxyde ferrique (Fe₂O₃) en oxyde ferreux (FeO).
